# EUROPEAN PATENT SPECIFICATION

(11) **EP 4 702 215 B1**
(45) Date of publication and mention of the grant of the patent: **09.12.2026**
(21) Application number: 23723684.9
(22) Date of filing: 28.04.2023
(51) Int. Cl.: E21B 19/00, H02G 11/02

(54) **CONTROL UNIT, MINING AND CONSTRUCTION RIG AND METHOD THEREIN FOR CONTROLLING A CABLE ARRANGEMENT DEVICE**
STEUEREINHEIT, BERGBAU- UND BAUANLAGE UND VERFAHREN DARIN ZUR STEUERUNG EINER KABELANORDNUNGSVORRICHTUNG
UNITÉ DE COMMANDE, APPAREIL D'EXPLOITATION MINIÈRE ET DE CONSTRUCTION ET PROCÉDÉ ASSOCIÉ POUR COMMANDER UN DISPOSITIF D'AGENCEMENT DE CÂBLE

(43) Date of publication of application: 04.03.2026
(73) Proprietor: Epiroc Rock Drills Aktiebolag, 701 91 Örebro (SE)
(72) Inventor: ANDERSSON, Emil, 701 91 Örebro (SE); THOR, Robert, 701 91 Örebro (SE)
(74) Representative: Epiroc Rock Drills AB
(86) International application number: PCT/SE2023/050408
(87) International publication number: WO 2024/225944

(56) References cited:
- CN-B- 102 639 793
- ES-T3- 2 297 194
- SE-C2- 536 501
- US-A1- 2016 362 946
- US-A1- 2019 242 202

## Description

### FIELD OF THE INVENTION

Embodiments herein relate to a control unit and a method performed therein. In particular, embodiments herein relate to controlling the operation of a cable arrangement device of a mining and construction rig.

### BACKGROUND OF THE INVENTION

Mining and construction rigs, such as drill rigs, using a lot of power from a mine grid needs to have components dimensioned for power transfer. For example, a cable on a cable reel needs to be dimensioned for a current flowing through the cable and excess heat build-up may also occur if too much current is flowing through the wires in relation to the number of windings still on the cable-reel. Another week spot is the rotating contact between the cable real and the electrical system on the drill rig where the cable is attached. If too high current is fed through the rotating contact, there is a risk of electric arcs between the rotating and stationary parts of the contact. The arcs may weld the parts of the rotating contact if the cable real is not rotated for some time which is often the case during drilling.

One known procedure for electronically controlling a reel assembly for deploying a cable, hose or umbilical connection is to use a system that may include an electronic control unit and an electro-pneumatic drive. Sensors may be provided on a turn down sheave that directs the cable, hose or umbilical connection toward a blowout preventer (BOP) stack. The sensors may provide information to the electronic control unit, such as a measured line tension and/or a length of cable, hose or umbilical connection that has been deployed.

Another known procedure that solves the problem of that existing cable reels have an uneven arrangement of cables during the winding process, uneven rotation speed of the drive control reel, insufficient protection of the slip ring box, and easy cable guiding process card machine, is a cable reel with a controller that can be adjusted to adjust the winding speed of the cable reel. When there are only a few laps left in the moving cable unwinding or reeling, the speed of the cable reel drive motor will be automatically reduced.

The present disclosure presents an improved viable solution of a method and a control unit that handles the issues described above.

Background art can be found in patent documents US 2016/362946 A1, ES 2 297 194 T3, CN 102 639 793 B, SE 536 501 C2 and US 2019/242202 A1.

### SUMMARY

An object of embodiments herein is to control the operation of a cable arrangement device in an efficient and reliable manner.

According to an aspect of embodiments herein the object is achieved by a method performed by a control unit for controlling an operating a cable arrangement device of a mining and construction rig. The control unit rotates the cable arrangement device back and forth during drilling based on collected load data and/or sensor data.

Such a method enables controlling the rotation of the cable arrangement device, e.g. so that the cable arrangement device does not overheat and to reduce energy consumption. Such a method prevents that parts of the cable arrangement device, e.g., parts of a rotating contact, weld together. Consequently, by rotating the cable arrangement device back and forth, increased service life of parts of the cable arrangement device can be achieved. This also enables that higher current can be fed through the parts of the cable arrangement device, such as the rotating contact.

According to one embodiment the sensor data may be obtained from one or more sensors located on the cable arrangement device.

According to one embodiment the load data may be obtained from a control system of the mining and construction rig.

According to one embodiment the cable arrangement device may comprise a cable, and obtaining the sensor data from one or more sensors located on the cable arrangement device may comprise collecting data related to one or more of a measured: current, voltage, temperature, and number of windings of the cable.

According to one embodiment obtaining the load data from the control system of the mining and construction rig may comprise collecting data relating to a load of the mining and construction rig.

According to one embodiment the cable arrangement device may be rotated according to a predefined pattern.

According to one embodiment the cable arrangement device may be rotated according to a predefined pattern when the obtained load data and/or sensor data is void.

According to one embodiment the cable arrangement device may be rotated by at least one motor.

According to one embodiment the at least one motor may be electrically or hydraulically controlled.

According to one embodiment the cable arrangement device may be rotated back and forth based on a length of the cable.

According to another aspect of embodiments herein, the object is achieved by providing a control unit configured to control an operation of a cable arrangement device of a mining and construction rig. The control unit is configured to rotate the cable arrangement device back and forth during drilling based on obtained load data and/or sensor data.

According to another aspect of embodiments herein, the object is achieved by providing a mining and construction rig comprising the control system.

Embodiments herein are based on the realisation that by controlling the rotation of the cable arrangement device based on collected load data and/or sensor data, it is possible to prevent that the cable arrangement device does not overheat, and the energy consumption can be reduced. Thus, the operation of the cable arrangement device is controlled in an efficient and reliable manner

### BRIEF DESCRIPTION OF THE FIGURES

Further objects and advantages, as well as technical features of the invention will become apparent through the following description of one or several embodiments given with reference to the appended figures, where:
Fig. 1 is a schematic overview according to embodiments herein;
Fig. 2 is a flowchart depicting a method according to embodiments herein; and
Fig. 3 is a schematic block diagram illustrating embodiments of a control system.

It should be noted that the drawings have not necessarily been drawn to scale and that the dimensions of certain elements may have been exaggerated for the sake of clarity.

### DETAILED DESCRIPTION

The present invention is described in more detail below with reference to the appended figures, in which examples of embodiments are shown. The invention is not limited to the described examples of embodiments; it is rather defined by the appended patent claims. Like numbers in the figures refer throughout to like elements.

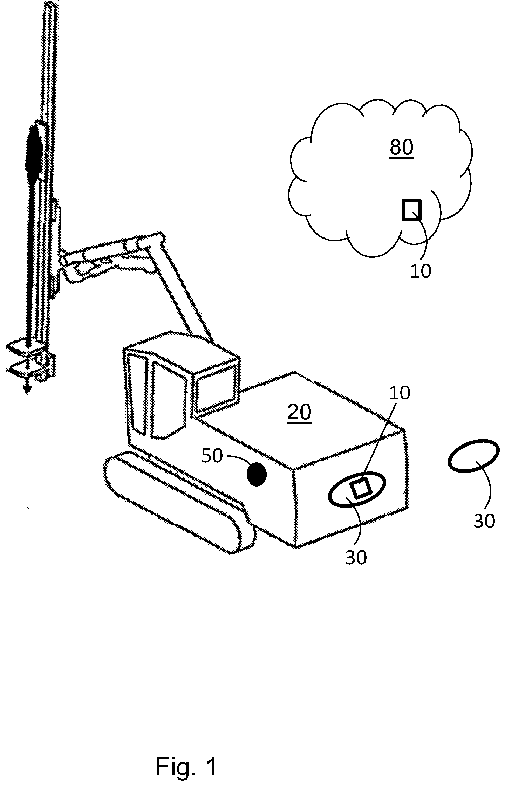

Fig. 1 illustrates a schematic overview of embodiments herein comprising a cable arrangement device 30 for a mining and construction rig 20. The cable arrangement device 30 may e.g. be a cable reel. The cable arrangement device 30 may comprise an electric cable which is arranged to be winded around a drum (not shown). The cable arrangement device 30 may comprise a cable connector. The cable arrangement device 30 may be located on the mining and construction rig 20, preferably at the back of the rig, but the cable arrangement 30 may also be standalone.

Fig. 1 further shows a control unit 10, which may be used for performing or partly performing the methods herein and which may be located in a cloud 80. The control unit 10 may be a control unit of the cable arrangement device 20, such as a cable reel controller (CRC). The control unit 10 is illustrated as one specific unit for simplicity, however, it may also comprise a plurality of control units 10. The control unit may be a control system. The control unit 10 may be a computer or a part of a computer, a server, a controller, a microprocessor, etc, located in one or several places on or outside the cable arrangement device, and which are implemented in the cloud 80. Fig. 1 further shows a control system 50 of the mining and construction rig 20, e.g. a machine control system (MCS).

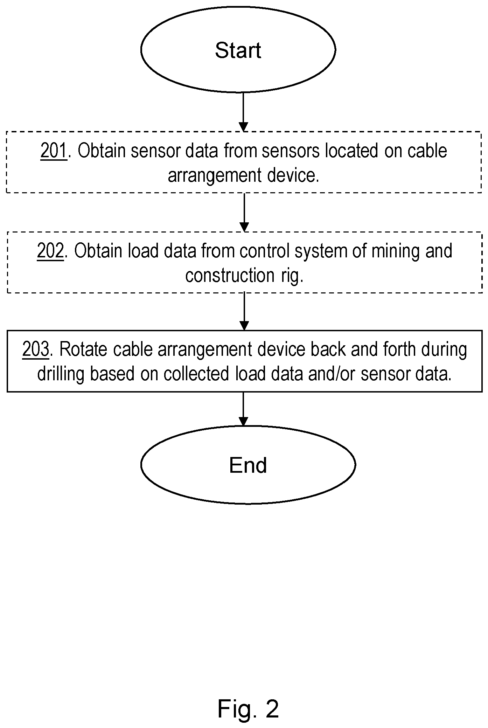

The method actions performed by the control unit 10 for controlling an operation of the cable arrangement device 30, e.g. controlling the cable arrangement device 30, of the mining and construction rig 20, according to embodiments herein, will now be described with reference to a flowchart depicted in Fig. 2. The actions do not have to be taken in the order stated below but may be taken in any suitable order. Actions performed in some embodiments are marked with dashed boxes.

**Action** 201. In order not to consume energy unnecessarily, the control unit 10 needs at least one source of information. Therefore, the control unit 10 may obtain sensor data from one or more sensors located on or attached to the cable arrangement device 30. The one or more sensors may be located on, in and/or in connection, e.g. functional connection, with the cable arrangement device 30 and/or with the mining and construction rig 20.

According to some embodiments, the cable arrangement device 30 may comprise a cable and obtaining the sensor data from one or more sensors located on or attached to the cable arrangement device 30 may comprise collecting data related to one or more of a measured: current, voltage, temperature, humidity and number of windings of the cable. Thus, sensor data, e.g. collected or received data related to measured current, voltage, temperature and humidity of the cable of the cable arrangement device 30 may be obtained by the control unit 10.

Obtaining the sensor data may involve receiving the sensor data from the one or more sensors. Thus, the sensor data may be transmitted from the one or more sensors, e.g. organized by a communication unit which may be connected to, coupled with, or attached to, the cable arrangement device 30 and/or the mining and construction rig 20. Obtaining the sensor data may thus further involve receiving the sensor data at the control unit 10.

**Action 202.** Another source of information may be to use data concerning current loads on the construction and mining rig 20 that can be provided by the construction and mining rig's separate control system. The control unit 10 may therefore obtain load data from the control system 50 of the mining and construction rig 20. According to some embodiments, obtaining the load data from the control system 50 of the mining and construction rig 20 may comprise collecting data relating to a load of the mining and construction rig 20. Examples of collecting load data of the mining and construction rig 20 may comprise collecting data of one or more of: a drill cycle, tramming, charging, operation without battery and rock reinforcement operation.

**Action 203.** The control unit 10 rotates, e.g. dynamically and/or automatically, the cable arrangement device 30 back and forth during drilling based on obtained load data and/or sensor data. According to some embodiments, the control unit 10 may rotate the cable arrangement device 30 back and forth during other power demanding operations such as tramming, charging, operation without battery or rock reinforcement operation, based on the obtained load data and/or sensor data. The cable arrangement device 30 may be rotated with small movements. According to some embodiments the cable arrangement device 30 may be rotated with small movements relative the length of the cable of the cable arrangement device 30. The control unit 10 may thus determine how to rotate the cable arrangement device 30 back and forth during drilling based on the obtained load data and/or sensor data. The control unit 10 may also determine how to rotate the cable arrangement device 30 back and forth during drilling based on other operations that require power. The control unit 10 may thus also determine how much, how actively, at what speed, and in what pattern, the cable arrangement device 30 may be rotated back and forth during drilling based on the obtained load data and/or sensor data or based on other operations that require power. The determination may be based on combining the obtained sensor data and load data. The drilling may be high energy process drilling and/or high effect process drilling.

The control unit 10 may automatically, e.g. dynamically, rotate the cable arrangement device 30 back and forth during drilling based on obtained load data and/or sensor data. Thus, the rotating of the cable arrangement device back and forth, e.g. the rotating pattern, may be dynamically controlled depending on parameters such as load of the mining and construction rig 20 and/or of the cable arrangement device 30, temperature, current, voltage, design of the cable arrangement device 30 and input from the control system 50 of the mining and construction rig 20.

The data, which may be handled e.g. in real time by the control unit 10, may be transmitted to the control system 50 of the mining and construction rig 20 so as not to exceed the capacity of the cable arrangement device 30 and to provide accurate information, which enables reduced power consumption.

According to some embodiments, the cable arrangement device 30 may be rotated according to a predefined pattern. The cable arrangement device 30 may be rotated according to a predefined pattern when the obtained load data and/or sensor data is void, e.g. invalid or missing. The rotation of the cable arrangement device 30 according to the predetermined pattern may be performed without concern to the current passing through the cable arrangement device 30. When rotating the cable arrangement device 30 according to a predetermined pattern, there may be a maximum limit to the effect that can be handled.

The cable arrangement device 30 may be rotated by at least one motor, e.g. a drive motor. The number of motors to use may depend on the design, e.g. construction, of the cable arrangement device 30. The at least one motor may be electrically or hydraulically controlled. According to some embodiments, the cable arrangement device 30 may be rotated back and forth based on, e.g. relative of, a length of the cable.

The one or more sensors, when used herein, may comprise e.g. one or more of: a temperature sensor, a humidity sensor, a voltage sensor, a current sensor, and a proximity sensor. These and other sensors may provide real-time collection of data to the control unit 10 and/or the control system 50. E.g. the data may be communicated from the one or more of the sensors to the control unit 10. The control unit 10 may then use this data for analysis and for determining how to rotate the cable arrangement device back and forth in the most useful manner.

Thus, by rotating the cable arrangement device back and forth based on obtained load data and/or sensor data, increased service life of parts of the cable arrangement device 30, such as the rotating contact, can be achieved as the risk of welding of the parts of the cable arrangement device 30 may be reduced, and enables that higher current can be fed through the parts of the cable arrangement device 30.

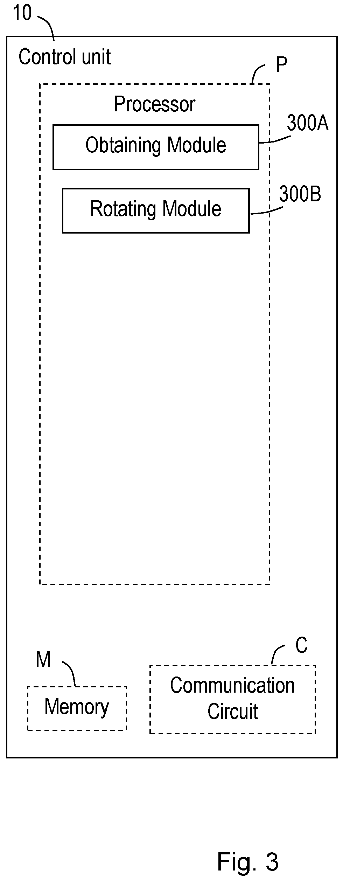

The block diagram in Fig. 3 illustrates a detailed but non-limiting example of how the control unit 10 may be structured to bring about the above-described solution and embodiments thereof. The control unit 10 may be configured to operate according to any of the examples and embodiments of employing the solution as described herein, where appropriate. The control unit 10 is shown to comprise a processor "P", a memory "M" and a communication circuit "C" with suitable equipment for transmitting and receiving data, information and messages in the manner described herein.

The communication circuit C in the control unit 10 thus comprises equipment configured for communication using a suitable protocol for the communication depending on the implementation. The data communication link between the different parts of the control unit 10 may for an example utilize one or a plurality of different types of wired links or wireless links, such as for example Digital Subscriber Line (DSL), xDSL, 2G, 3G, 4G, 5G TCP/IP, Wi-Fi, Bluetooth, WiMax, Wireless Local Loop (WLL), Public Switched Telephone Network (PSTN), optical fibre, Long Range (LoRa), LoRa Wireless Area Network (LoRaWAN), Low Power Wide Area (LPWA) or a combination thereof. The solution is however not limited to any specific types of messages or protocols. For example, the control unit 10 may be adapted to communicate with the control system of the mining and construction rig 50, a control centre or the like for controlling the cable arrangement device 30 described herein.

The control unit 10 is, e.g. by means of units, modules, or the like, configured or arranged to perform at least some of the actions of the flowchart in Fig. 2 as follows. The control unit 10 is configured to control an operation of the cable arrangement device 30 of the mining and construction rig 20. All or at least some of the actions of the flowchart in Fig. 2 may also be performed by the control system 50.

The control unit 10 is configured to obtain the sensor data from the one or more sensors located on or attached to the cable arrangement device 30. This operation may be performed by an **obtaining module 300A** in the control system 10, as illustrated in action 201. The cable arrangement device 30 may comprise a cable, and to obtain the sensor data from one or more sensors located on the mining and construction rig 20 may comprise to collect data related to the one or more of a measured: current, voltage, temperature, and number of windings of the cable.

The control unit 10 may further be configured to obtain the load data from the control system 50 of the mining and construction rig 20. This operation may be performed by the collecting module 300A in the control unit 10, as illustrated in action 202. To obtain the load data from the control system 50 may comprise to collect data relating to the load of the mining and construction rig 20.

The control unit 10 may be configured to rotate the cable arrangement device 30 back and forth during drilling based on obtained load data and/or sensor data. This operation may be performed by a **rotating module 300B** in the control unit 10 as illustrated in action 203. The control unit 10 may rotate the cable arrangement device 30 back and forth during other power demanding operations such as tramming, charging, operation without battery or rock reinforcement operation, based on the obtained load data and/or sensor data. The control unit 10 may be adapted to rotate the cable arrangement device 30 according to a predefined pattern. The control unit 10 may be adapted to rotate the cable arrangement device 30 according to a predefined pattern when the obtained load data and/or sensor data is void. The cable arrangement device 30 may be rotated back and forth based on the length of the cable. The drilling may be high energy process drilling and/or high effect process drilling.

It should be noted that Fig. 3 illustrates various functional modules in the control unit 10 and the skilled person is able to implement these functional modules in practice using suitable software and hardware equipment. Thus, the solution is generally not limited to the shown structure of the control unit 10, and the functional modules therein may be configured to operate according to any of the features, examples and embodiments described in this disclosure, where appropriate.

The functional modules 300A-B described above may be implemented in the control unit 10 by means of program modules of a computer program comprising code means which, when run by the processor P causes the control system 10 to perform the above-described actions and procedures. The processor P may comprise a single Central Processing Unit (CPU) or could comprise two or more processing units. For example, the processor P may include a general-purpose microprocessor, an instruction set processor and/or related chips sets and/or a special purpose microprocessor such as an Application Specific Integrated Circuit (ASIC). The processor P may also comprise a storage for caching purposes.

The computer program may be carried by a computer program product in the control unit 10 in the form of a memory having a computer readable medium and being connected to the processor P. The computer program product or memory M in the control unit 10 thus comprises a computer readable medium on which the computer program is stored e.g. in the form of computer program modules or the like. For example, the memory M may be a flash memory, a Random-Access Memory (RAM), a Read-Only Memory (ROM) or an Electrically Erasable Programmable ROM (EEPROM), and the program modules could in alternative embodiments be distributed on different computer program products in the form of memories within the control unit 10.

While the solution has been described with reference to specific exemplifying embodiments, the description is generally only intended to illustrate the inventive concept and should not be taken as limiting the scope of the solution. For example, the terms "sensor data", "load data" and "cable arrangement device" have been used throughout this disclosure, although any other corresponding entities, functions, and/or parameters could also be used having the features and characteristics described here. The solution is defined by the appended claims.

It will be appreciated that the foregoing description and the accompanying drawings represent non-limiting examples of the method and arrangement taught herein. As such, the arrangement and techniques taught herein are not limited by the foregoing description and accompanying drawings. Instead, the embodiments herein are limited only by the following claims.

## Claims

1. A method for controlling an operation of a cable arrangement device (30) of a mining and construction rig (20), wherein the cable arrangement device (30) comprises a cable, wherein the method comprises:
obtaining (201) sensor data from one or more sensors located on or attached to the cable arrangement device (30), wherein obtaining (201) the sensor data comprises collecting data related to one or more of a measured: current, voltage, temperature, and humidity of the cable;
obtaining (202) load data from a control system (50) of the mining and construction rig (20); and
rotating (203) the cable arrangement device (30) back and forth during drilling based on the obtained load data and/or sensor data.

2. The method according to claim 1, wherein obtaining (201) the sensor data from one or more sensors located on the cable arrangement device (30) further comprises collecting data related to a measured number of windings of the cable.

3. The method according to any one of claims 1-2, wherein obtaining (202) the load data from the control system (50) of the mining and construction rig (20) comprises collecting data relating to a load of the mining and construction rig (20).

4. The method according to any one of claims 1-3, wherein the cable arrangement device (30) is rotated according to a predefined pattern.

5. The method according to any one of claims 1-4, wherein the cable arrangement device (30) is rotated according to a predefined pattern when the obtained load data and/or sensor data is void.

6. The method according to any one of claims 1-5, wherein the cable arrangement device (30) is rotated by at least one motor.

7. The method according to claim 6, wherein the at least one motor is electrically or hydraulically controlled.

8. The method according to any one of claims1-7, wherein the cable arrangement device (30) is rotated back and forth based on a length of the cable.

9. The method according to any one of claims 1-8, wherein the drilling is high energy process drilling and/or high effect process drilling.

10. A control unit (10) configured to control an operation of a cable arrangement device (30) of a mining and construction rig (20), wherein the cable arrangement device (30) comprises a cable, wherein the control unit (10) is further configured to:
obtain sensor data from one or more sensors located on or attached to the cable arrangement device (30), wherein to obtain the sensor data comprises to collect data related to one or more of a measured: current, voltage, temperature, and humidity of the cable;
obtain load data from a control system (50) of the mining and construction rig (20); and
rotate the cable arrangement device (30) back and forth during drilling based on the obtained load data and/or sensor data.

11. The control unit (10) according to claim 10, wherein to obtain the sensor data from one or more sensors located on the mining and construction rig (20) further comprises to collect data related to a measured number of windings of the cable.

12. The control unit (10) according to any one of claims 10-11, wherein to obtain the load data from the control system (50) comprises to collect data relating to a load of the mining and construction rig (20).

13. The control unit (10) according to any one of claims 10-12, wherein the control unit (10) is adapted to rotate the cable arrangement device (30) according to a predefined pattern.

14. The control unit (10) according to any one of claims 10-13, wherein the control unit (10) is configured to rotate the cable arrangement device (30) according to a predefined pattern when the obtained load data and/or sensor data is void.

15. A mining and construction rig (20) comprising the control unit (10) according to any of the claims 10-14.

## Patentansprüche

1. Verfahren zum Steuern eines Betriebs einer Kabelanordnungsvorrichtung (30) einer Bergbau- und Bauanlage (20), wobei die Kabelanordnungsvorrichtung (30) ein Kabel umfasst, wobei das Verfahren Folgendes umfasst:
Erhalten (201) von Sensordaten von einem oder mehreren Sensoren, die sich auf der Kabelanordnungsvorrichtung (30) befinden oder an dieser angebracht sind, wobei das Erhalten (201) der Sensordaten das Erfassen von Daten umfasst, die sich auf eine oder mehrere einer folgenden gemessenen Größe beziehen: Strom, Spannung, Temperatur und Feuchtigkeit des Kabels;
Erhalten (202) von Lastdaten von einem Steuersystem (50) der Bergbau- und Bauanlage (20); und
Hin- und Herdrehen (203) der Kabelanordnungsvorrichtung (30) während des Bohrens auf der Grundlage der erhaltenen Lastdaten und/oder Sensordaten.

2. Verfahren nach Anspruch 1, wobei das Erhalten (201) der Sensordaten von einem oder mehreren Sensoren, die sich auf der Kabelanordnungsvorrichtung (30) befinden, weiter das Erfassen von Daten umfasst, die sich auf eine gemessene Anzahl von Windungen des Kabels beziehen.

3. Verfahren nach einem der Ansprüche 1-2, wobei das Erhalten (202) der Lastdaten von dem Steuersystem (50) der Bergbau- und Bauanlage (20) das Erfassen von Daten umfasst, die sich auf eine Last der Bergbau- und Bauanlage (20) beziehen.

4. Verfahren nach einem der Ansprüche 1-3, wobei die Kabelanordnungsvorrichtung (30) nach einem vordefinierten Muster gedreht wird.

5. Verfahren nach einem der Ansprüche 1-4, wobei die Kabelanordnungsvorrichtung (30) nach einem vordefinierten Muster gedreht wird, wenn die erhaltenen Lastdaten und/oder Sensordaten leer sind.

6. Verfahren nach einem der Ansprüche 1-5, wobei die Kabelanordnungsvorrichtung (30) durch mindestens einen Motor gedreht wird.

7. Verfahren nach Anspruch 6, wobei der mindestens eine Motor elektrisch oder hydraulisch gesteuert wird.

8. Verfahren nach einem der Ansprüche 1-7, wobei die Kabelanordnungsvorrichtung (30) basierend auf der Länge des Kabels hin- und hergedreht wird.

9. Verfahren nach einem der Ansprüche 1-8, wobei das Bohren Hochenergieprozessbohren und/oder Hocheffektprozessbohren ist.

10. Steuereinheit (10), die ausgebildet ist, einen Betrieb einer Kabelanordnungsvorrichtung (30) einer Bergbau- und Bauanlage (20) zu steuern, wobei die Kabelanordnungsvorrichtung (30) ein Kabel umfasst, wobei die Steuereinheit (10) weiter dazu ausgebildet ist:
Sensordaten von einem oder mehreren Sensoren zu erhalten, die sich auf der Kabelanordnungsvorrichtung (30) befinden oder an dieser angebracht sind, wobei das Erhalten der Sensordaten das Erfassen von Daten umfasst, die sich auf eine oder mehrere einer gemessenen folgenden Größe beziehen: Strom, Spannung, Temperatur und Feuchtigkeit des Kabels;
Lastdaten von einem Steuersystem (50) der Bergbau- und Bauanlage (20) zu erhalten; und
die Kabelanordnungsvorrichtung (30) während des Bohrens basierend auf den erhaltenen Lastdaten und/oder Sensordaten hin- und herzudrehen.

11. Steuereinheit (10) nach Anspruch 10, wobei das Erhalten der Sensordaten von einem oder mehreren Sensoren, die sich auf der Bergbau- und Bauanlage (20) befinden, weiter das Erfassen von Daten umfasst, die sich auf eine gemessene Anzahl von Windungen des Kabels beziehen.

12. Steuereinheit (10) nach einem der Ansprüche 10-11, wobei das Erhalten der Lastdaten von dem Steuersystem (50) das Erfassen von Daten umfasst, die sich auf eine Last der Bergbau- und Bauanlage (20) beziehen.

13. Steuereinheit (10) nach einem der Ansprüche 10-12, wobei die Steuereinheit (10) dazu ausgelegt ist, die Kabelanordnungsvorrichtung (30) nach einem vordefinierten Muster zu drehen.

14. Steuereinheit (10) nach einem der Ansprüche 10-13, wobei die Steuereinheit (10) ausgebildet ist, die Kabelanordnungsvorrichtung (30) nach einem vordefinierten Muster zu drehen, wenn die erhaltenen Lastdaten und/oder Sensordaten leer sind.

15. Bergbau- und Bauanlage (20), die die Steuereinheit (10) nach einem der Ansprüche 10-14 umfasst.

## Revendications

1. Procédé de commande d'un fonctionnement d'un dispositif d'agencement de câble (30) d'un appareil d'exploitation minière et de construction (20), dans lequel le dispositif d'agencement de câble (30) comprend un câble, dans lequel le procédé comprend :
une obtention (201) de données de capteur issues d'un ou plusieurs capteurs situés sur ou fixés au dispositif d'agencement de câble (30), dans lequel l'obtention (201) des données de capteur comprend une collecte de données relatives à une ou plusieurs grandeurs mesurées parmi : un courant, une tension, une température, et une humidité du câble ;
une obtention (202) de données de charge issues d'un système de commande (50) de l'appareil d'exploitation minière et de construction (20) ; et
une rotation (203) du dispositif d'agencement de câble (30) d'avant en arrière pendant un forage sur la base des données de charge et/ou des données de capteur obtenues.

2. Procédé selon la revendication 1, dans lequel l'obtention (201) des données de capteur issues d'un ou plusieurs capteurs situés sur le dispositif d'agencement de câble (30) comprend en outre une collecte de données relatives à un nombre mesuré d'enroulements du câble.

3. Procédé selon l'une quelconque des revendications 1 à 2, dans lequel l'obtention (202) des données de charge issues du système de commande (50) de l'appareil d'exploitation minière et de construction (20) comprend une collecte de données relatives à une charge de l'appareil d'exploitation minière et de construction (20).

4. Procédé selon l'une quelconque des revendications 1 à 3, dans lequel le dispositif d'agencement de câble (30) est mis en rotation selon un schéma prédéfini.

5. Procédé selon l'une quelconque des revendications 1 à 4, dans lequel le dispositif d'agencement de câble (30) est mis en rotation selon un schéma prédéfini lorsque les données de charge et/ou les données de capteur obtenues sont vides.

6. Procédé selon l'une quelconque des revendications 1 à 5, dans lequel le dispositif d'agencement de câble (30) est mis en rotation par au moins un moteur.

7. Procédé selon la revendication 6, dans lequel l'au moins un moteur est commandé électriquement ou hydrauliquement.

8. Procédé selon l'une quelconque des revendications 1 à 7, dans lequel le dispositif d'agencement de câble (30) est mis en rotation d'avant en arrière sur la base d'une longueur du câble.

9. Procédé selon l'une quelconque des revendications 1 à 8, dans lequel le forage est un forage à processus à haute énergie et/ou un forage à processus à haute efficacité.

10. Unité de commande (10) configurée pour commander un fonctionnement d'un dispositif d'agencement de câble (30) d'un appareil d'exploitation minière et de construction (20), dans laquelle le dispositif d'agencement de câble (30) comprend un câble, dans laquelle l'unité de commande (10) est configurée en outre pour :
obtenir des données de capteur issues d'un ou plusieurs capteurs situés sur ou fixés au dispositif d'agencement de câble (30), dans laquelle le fait d'obtenir les données de capteur comprend le fait de collecter des données relatives à une ou plusieurs grandeurs mesurées parmi : un courant, une tension, une température, et une humidité du câble ;
obtenir des données de charge issues d'un système de commande (50) de l'appareil d'exploitation minière et de construction (20) ; et
mettre en rotation le dispositif d'agencement de câble (30) d'avant en arrière pendant un forage sur la base des données de charge et/ou des données de capteur obtenues.

11. Unité de commande (10) selon la revendication 10, dans laquelle le fait d'obtenir les données de capteur issues d'un ou plusieurs capteurs situés sur l'appareil d'exploitation minière et de construction (20) comprend en outre le fait de collecter des données relatives à un nombre mesuré d'enroulements du câble.

12. Unité de commande (10) selon l'une quelconque des revendications 10 à 11, dans laquelle le fait d'obtenir les données de charge issues du système de commande (50) comprend le fait de collecter des données relatives à une charge de l'appareil d'exploitation minière et de construction (20).

13. Unité de commande (10) selon l'une quelconque des revendications 10 à 12, dans laquelle l'unité de commande (10) est adaptée pour mettre en rotation le dispositif d'agencement de câble (30) selon un schéma prédéfini.

14. Unité de commande (10) selon l'une quelconque des revendications 10 à 13, dans laquelle l'unité de commande (10) est adaptée pour mettre en rotation le dispositif d'agencement de câble (30) selon un schéma prédéfini lorsque les données de charge et/ou les données de capteur obtenues sont vides.

15. Appareil d'exploitation minière et de construction (20) comprenant l'unité de commande (10) selon l'une quelconque des revendications 10 à 14.
